# EUROPÄISCHE PATENTSCHRIFT

(11) **EP 0 656 504 B1**
(45) Veröffentlichungstag und Bekanntmachung des Hinweises auf die Patenterteilung: **05.08.1998**
(21) Anmeldenummer: 94115539.2
(22) Anmeldetag: 04.10.1994
(51) Int. Cl.: F16L 55/162

(54) **Vorrichtung zum Abdichten von Leckstellen in Rohren vom Rohrinnern her und Verfahren zum Abdichten der Leckstellen**
Internal pipeline leak sealing device and leak sealing process
Dispositif d'étanchement de fuites par l'intérieur des tuyaux et procédé d'étanchement des fuites

(30) Priorität: 03.12.1993 DE 9318409 U; 19.01.1994 DE 4401318
(43) Veröffentlichungstag der Anmeldung: 07.06.1995
(73) Patentinhaber: Uhrig Kanaltechnik GmbH, 78187 Geisingen (DE)
(72) Erfinder: Graf, Eckhard, D-78073 Oberbaldingen (DE); Graf, Jürgen, D-78073 Oberbaldingen (DE); Mauz, Hubert, D-78166 Donaueschingen (DE)
(74) Vertreter: Durm, Klaus, Dr.-Ing.

(56) Entgegenhaltungen:
- EP-A- 0 467 024
- DE-U- 8 707 049
- US-A- 3 149 646

## Beschreibung

Die Erfindung betrifft eine Vorrichtung zum Abdichten von Leckstellen in Rohren vom Rohrinnern her, mit einem an der Leckstelle in Umfangsrichtung aufweitbaren Dichtungsmanschette und einem an die Leckstelle dirigierbaren Montierwagen, wobei die Dichtungsmanschette die Form eines aus einem federelastischen Material ringförmig zusammengebogenen, aufweitbaren Bandes aufweist, dessen beide Bandenden sich in Umfangsrichtung überlappen, von einem Schlauch aus gummielastischem Material vollständig umgeben ist und eine Arretiereinrichtung trägt, welche sie in aufgeweitetem Zustand hält, und der Montierwagen ein mit Rädern versehenes Fahrgestell aufweist. Die Erfindung bezieht sich außerdem auf ein Verfahren zur Abdichtung von Leckstellen in Rohren unter Verwendung der Dichtungsmanschette und des Montierwagens.

Die Erfindung findet insbesondere Anwendung im Zusammenhang mit der Sanierung von Kanalisationen, und sie dient vorwiegend zur Reparatur von Undichtigkeitsstellen von unterirdisch verlegten Kanalrohren aus Beton oder einem ähnlichen Werkstoff.

Es ist bekannt, Leckstellen von Rohren vom Rohrinnern her abzudichten. Hierzu dienen spiralig zusammengebogene, gummiüberzogene Dichtungsmanschetten aus federelastischem Material, welche von einem Wagen in das Rohr eingeführt und an der Stelle der Undichtheit mittels eines von außen aufblasbaren Luftkissens so lange aufgeweitet werden, bis sie sich an die Rohrinnenwand angelegt haben. Eine Arretiervorrichtung hält die Manschette in ihrer aufgeweiteten Stellung. Von Nachteil hierbei ist, daß die zum Anpressen der Dichtungsmanschette erforderlichen hohen Kräfte mit dem Luftkissen nur schwer erreichbar sind und ein vollständiges Abdichten des Lecks kaum erzielt wird.

Die Aufgabe der Erfindung besteht in der Konzeption einer Dichtungsmanschette sowie einem zu deren Anbringen im Rohrinnern geeigneten Montierwagen, mit deren Hilfe auf einfache, zeit- und kostensparende Weise ein sehr zuverlässiges Abdichten von Lecks in Rohren durchgeführt werden kann.

Zur Lösung der gestellten Aufgabe wird von einer Vorrichtung der eingangs beschriebenen Art ausgegangen, und gelöst wird die Aufgabe dadurch, daß die Dichtungsmanschette wenigstens eine vom Montierwagen betätigbare Aufweitvorrichtung aufweist, mit der die Arretiereinrichtung in Verbindung steht, und daß der Montierwagen eine Betätigungsvorrichtung für die Aufweitvorrichtung aufweist und eine Heb- und Senkvorrichtung für die Betätigungsvorrichtung besitzt.

Die vorgeschlagene Anordnung einer Aufweitvorrichtung an der Dichtungsmanschette selbst in Verbindung mit dem Aufweiten der Manschette durch die hebund senkbare Betätigungsvorrichtung des Montierwagens gestattet nach erfolgter Positionierung ein schnelles "Setzen" der Dichtungsmanschette unter Anwendung hoher Aufweitkräfte, was eine sichere Abdichtung zur Folge hat.

In vorteilhafter Ausgestaltung ist die Aufweitvorrichtung der Dichtungsmanschette wenigstens ein am innenliegenden Bandende in Umfangsrichtung angeordneter Schlitz, dessen eine Längsseite eine Zahnreihe trägt, und am außenliegenden Bandende ist ein Ritzel drehbar gelagert, welches in die Zahnreihe eingreift. Diese Ausbildung der Aufweitvorrichtung läßt nicht nur eine einfache Betätigung durch den Montierwagen zu, sondern erlaubt es auch, hohe Anpreßkräfte auszuüben.

Als Arretiereinrichtung kann ein im Schlitz liegender Sperriegel dienen, der in das Ritzel eingreift und unter Einwirkung eines Federelementes steht. Dieser Sperriegel stellt eine kostengünstige, einfach montierbare sowie funktionssichere Sperrvorrichtung dar.

Es ist zweckmäßig, wenn das innenliegende Bandende der Dichtungsmanschette eine in Umfangsrichtung vorgesehene Führungsnut trägt, in die ein am außenliegenden Bandende befestigter, in die Führungsnut eingreifender Niederhalter eingreift. Diese Maßnahme hält die federelastische Dichtungsmanschette vor ihrem Aufweiten ihrem vorgesehenen Montagezustand, in welchem der Durchmesser der Dichtungsmanschette kleiner ist als die lichte Weite des abzudichtenden Rohres. Darüber hinaus dient diese Führungsnut zur Führung der beiden sich überlappenden Bandenden während des Aufweitvorganges.

Zur Verbesserung der Abdichtung, insbesondere von Rohren mit einer sehr rauhen, zerklüfteten Innenoberfläche, kann die Dichtungsmanschette auf ihrem Schlauch zwei ringsumlaufende Dichtungsbänder aus einem beim Kontakt mit Wasser aufquellenden, gummiartigen Werkstoff tragen, die dicht neben den beiden Umfangsrändern der Dichtungsmanschette angeordnet sind.

Von besonderem Vorteil ist es, wenn in die Dichtungsbänder Streifen aus Kupfer eingelegt sind. Dies verhindert zuverlässig das Durchwachsen von feinen Verästelungen von Pflanzenwurzeln, weil oxydierendes Kupfer für Pflanzen als Gift wirksam ist.

Als Betätigungsvorrichtung für die Aufweitvorrichtung der Dichtungsmanschette trägt das Fahrgestell des Montierwagens wenigstens einen motorgetriebenen Drehschrauber, dessen Schraubwerkzeug an seinem Kopf eine Steckaufnahme für das Ritzel der Aufweitvorrichtung aufweist. Diese Ausgestaltung der Betätigungsvorrichtung kann durch preiswerte, handelsübliche Drehschrauber bewerkstelligt werden.

Ein sicheres Verfahren des Montierwagens ist dann gewährleistet, wenn sein Fahrgestell vier Räder aufweist, von welchen jeweils zwei auf einer gemeinsamen Achse drehbar befestigt sind.

Zweckmäßig ist zur Bildung der Heb- und Senkvorrichtung jede Achse der Räder mittels eines Schwenkrahmens am Fahrgestell angelenkt, und an jedem Schwenkrahmen greift ein Zylinder-Kolben-Aggregat an. Dabei können handelsübliche Zylinder-Kolben-Aggregate eingesetzt werden.

Bei dem starken Anziehen der Aufweitvorrichtung kann es vorkommen, daß sich aufgrund von Verspannungen die Schraubwerkzeuge der Drehschrauber nicht von selbst von den Ritzeln lösen und der Montierwagen daher nicht auf die Sohle des Rohres abgesetzt werden kann. Um die Trennung des Montierwagens von der "gesetzten" Dichtungsmanschette zu bewirken, kann dieser wenigstens einen mechanischen Druckstempel aufweisen, welcher senkrecht zur Verfahrrichtung des Montierwagens wirksam ist.

Am Fahrgestell des Montierwagens wird zweckmäßig eine Kupplungsvorrichtung zum Ankuppeln an einen ferngesteuerten Antriebswagen vorgesehen sein.

Gemäß der Erfindung wird zum Abdichten von Leckstellen in Rohren vom Rohrinnern her unter Verwendung eines Montierwagens sowie einer Dichtungsmanschette wie oben beschrieben, wobei der Montierwagen, welcher die Dichtungsmanschette trägt, zu einer Leckstelle dirigiert wird, an der die Dichtungsmanschette in Umfangsrichtung aufgeweitet wird, folgendermaßen vorgegangen die Dichtungsmanschette wird zunächst so über den Montierwagen geschoben, daß sie dessen Fahrgestell umgibt und seine Räder frei läßt, die Dichtungsmanschette wird nun auf den Montierwagen aufgesetzt, die Dichtungsmanschette wird sodann an den Scheitel des Rohrinnern gehoben und dort angedrückt, anschließend wird die Aufweitvorrichtung der Dichtungsmanschette von der Betätigungsvorrichtung des Montierwagens ergriffen, in Tätigkeit gesetzt und die Dichtungsmanschette so lange aufgeweitet, bis sie am Rohrinnern ringsum fest anliegt, und die Dichtungsmanschette wird danach in aufgeweitetem Zustand durch die Arretiereinrichtung in sich fixiert.

Es ist zweckmäßig, daß - soweit erforderlich - der Montierwagen zuletzt durch Abstoßen mittels mechanischer Druckstempel von der "gesetzten" Dichtungsmanschette getrennt wird.

Die Erfindung wird nachfolgend an einem Ausführungsbeispiel unter Bezugnahme auf die beiden beigefügten Zeichnungsblätter näher erläutert. Dabei zeigen
- Fig. 1: einen, eine Dichtungsmanschette tragenden Montierwagen, angekuppelt an einen ferngesteuerten, fahrbaren Antriebswagen, im Innern eines Rohres, in perspektivischer Darstellung;
- Fig. 2: eine Teilansicht einer Dichtungsmanschette mit Blick auf deren Arretiereinrichtung, ebenfalls perspektivisch dargestellt.

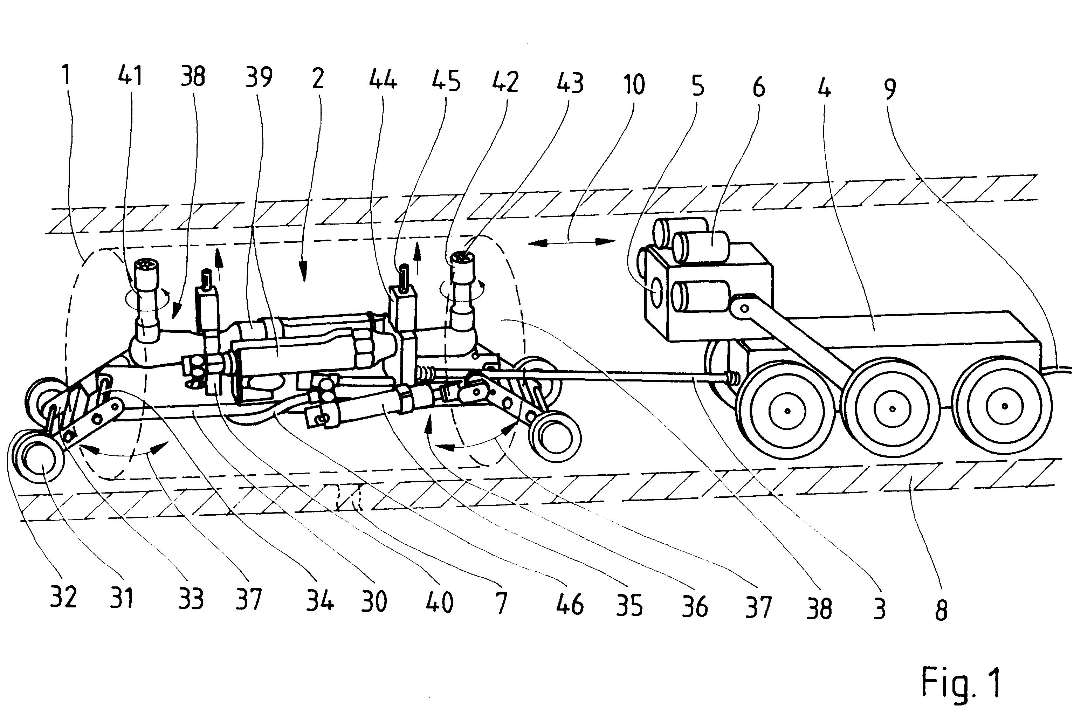

Die zur Abdichtung von Leckstellen in Rohren dienende Vorrichtung besteht (Figur 1) aus einer Dichtungsmanschette 1 und einem Montierwagen 2. Der Montierwagen 2 ist über eine Kupplungsvorrichtung 3 mit einem mehrachsigem Antriebswagen 4 verbunden. Dieser Antriebswagen 4 trägt eine Fernsehkamera 5 sowie vier Scheinwerfer 6 und dient dazu, den Montierwagen 2 an eine abzudichtende Leckstelle 7 eines Rohres 8, beispielsweise eines Betonrohres, zu dirigieren. Hierzu ist der Antriebswagen 4 über eine flexible Leitung 9 mit einer Steuer- und Energiezentrale (nicht dargestellt) verbunden, die sich außerhalb des Rohres 8 befindet. Der Antriebswagen 4 und der Montierwagen 2 fahren in Verfahrrichtung 10 auf und entlang der Sohle des Rohres 8 im Rohrinnern.

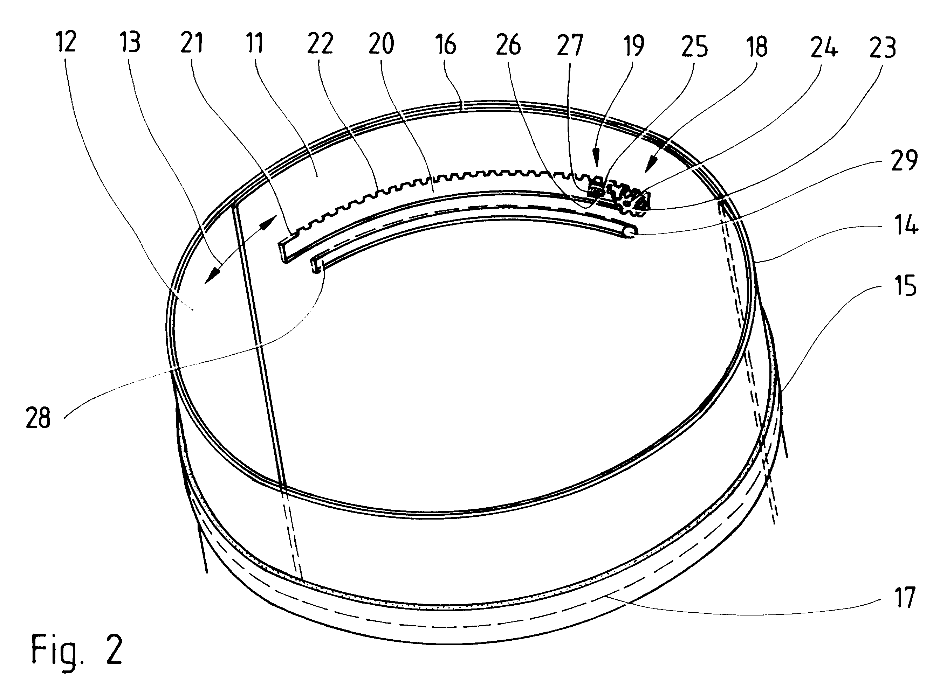

Die im wesentlichen hohlzylindrische Dichtungsmanschette 1 besteht aus einem federelastischen Material, beispielsweise einem Blech aus nichtrostendem Stahl, und sie besitzt (Figur 2) die Form eines ringförmig bzw. spiralig zusammengebogenen Bandes, dessen eines, innenliegendes Bandende 11 vom anderen, außenliegenden Bandende 12 in Umfangsrichtung 13 überlappt wird. Die Dichtungsmanschette 1 ist mit einem Schlauch 14 aus einem gummielastischen, korrosionsbeständigen Material vollständig überzogen, und sie trägt auf diesem Schlauch 14 an ihren beiden Enden je ein ringsum laufendes Dichtungsband 15 aus einem besonderen, bei Kontakt mit Wasser stark aufquellenden, gummiartigen Werkstoff. Diese beiden Dichtungsbänder 15 sind jeweils in geringem Abstand neben den Umfangsrändern 16 der Dichtungsmanschette 1 angeordnet. In die Dichtungsbänder 15 ist ein Streifen 17 aus Kupfer in Gestalt eines Kupferdrahtes, Kupferbandes, eines Drahtgeflechts oder einer Kordel aus Kupferdraht eingelegt bzw. eingeformt.

Die Dichtungsmanschette 1 trägt eine Aufweitvorrichtung 18, die vom Montierwagen 2 betätigbar ist, sowie eine selbsttätig wirkende Arretiereinrichtung 19, welche die Dichtungsmanschette 1 in in Umfangsrichtung 13 aufgeweitetem Zustand hält.

Die Aufweitvorrichtung 18 besteht aus einem am innenliegenden Bandende 11 nahe und parallel zum Umfangsrand 16 angeordneten Schlitz 20, dessen eine Längsseite 21 eine Zahnreihe 22 trägt, sowie aus einem Ritzel 23. Dieses Ritzel 23, dessen Durchmesser etwas kleiner ist als die lichte Weite des Schlitzes 20, sitzt in diesem Schlitz 20 und ist gegenüber am außenliegenden Bandende 12 auf einem angenieteten Achsstummel 24 drehbar gelagert. Das Ritzel 23 greift in die Zahnreihe 22 ein, die Zähne des Ritzels 23 befinden sich in jeder Stellung der Bandenden 11, 12 gegeneinander mit den Zähnen der Zahnreihe 22 im Eingriff.

Als Arretiereinrichtung 19, welche die durch den Montierwagen 2 aufgeweitete Dichtungsmanschette 1 in ihrem aufgeweiteten, gespannten Zustand irreversibel festhält, dient ein kleiner Sperriegel 25, der in das Ritzel 23, nämlich in dessen Zähne, eingreift. Dieser Sperriegel 25 ist am außenliegenden Bandende 12 der Dichtungsmanschette 1 mittels eines Nietes 26, der in einen Längsschlitz des Sperriegels 25 eingreift, verschiebbar befestigt. Der Sperriegel 25 steht unter der Einwirkung eines Federelements 27 in Gestalt einer im Längsschlitz sitzenden Druckfeder, welche die an die Form der Zähne des Ritzels 23 angepaßte Frontkante des Sperriegels 25 gegen diese Zähne drückt. Der Sperriegel 25 gestattet dem Ritzel 24 eine Drehung lediglich im einen, beim Aufweiten sich einstellenden Drehsinn des Ritzels 24 - er sperrt in Gegendrehrichtung und bewirkt damit, daß die Dichtungsmanschette 1 in aufgeweitetem Zustand verbleibt.

Das innenliegende Bandende 11 weist eine in Umfangsrichtung 13 angeordnete, schmale Führungsnut 28 auf, in welche ein Niederhalter 29 eingreift, der am außenliegenden Bandende 12 befestigt ist. Bei dem Niederhalter 29 handelt es sich um einen mit einem breiten, flachen und die Führungsnutz 28 überdeckenden Kopf versehenen Niet.

Der Montierwagen 2, welcher zum Verfahren im Rohrinnern vorgesehen ist, weist ein Fahrgestellt 30 in Gestalt einer länglich-rechteckigen Bodenplatte auf. Das Fahrgestell 30 trägt vier Räder 31, von welchen jeweils 2 auf einer gemeinsamen Achse 32 drehbar angeordnet sind. Jede der beiden Achsen 32 ist mittels eines im Grundriß rechteckigen und H-förmigen Schwenkrahmens 33 am Fahrgestell 30 unter Verwendung einer Schwenkachse 34 angelenkt. An jedem Schwenkrahmen 33 greift ein mit Druckluft betätigtes Zylinder-Kolben-Aggregat 35 an, welches mit seinem Zylinder am Fahrgestell 30 und mit seiner Kolbenstange an einem verlängerten Hebel des Schwenkrahmens 33 angesetzt ist. Die Schwenkrahmen 33 bilden zusammen mit den Zylinder-Kolben-Aggregaten 35 eine Heb- und Senkvorrichtung 36, welche es gestattet, den Montierwagen 2 in abgesenkter Stellung in das Rohrinnere einzufahren und ihn an vorgesehener Stelle anzuheben. Die Heb- und Senkvorgänge werden durch Verschwenken der beiden Schwenkrahmen 33 in Richtung der beiden Pfeile 37 bewirkt.

Der Montierwagen 2 beträgt zwei Betätigungsvorrichtungen 38 für die Aufweitvorrichtungen 28 der Dichtungsmanschette 1. Bei diesen Betätigungsvorrichtungen 38 handelt es sich um handelsübliche, unter Verwendung von Druckluft angetriebene Drehschrauber 39, die mittels Halteböcken 40 auf dem Fahrgestell 30 befestigt sind. Am Ende jedes Drehschraubers 39 sitzt rechtwinklig angeordnet ein einsteckbares, im wesentlichen zylinderförmiges Schraubwerkzeug 41 mit einem Kopf 42, welcher eine Steckaufnahme 43 für das Ritzel 23 der Aufweitvorrichtung 18 der Dichtungsmanschette 1 aufweist. Das Ritzel 23 paßt in die vertiefte Steckaufnahme 43.

Neben der Heb- und Senkvorrichtung 36 und den beiden Betätigungsvorrichtungen 38 besitzt der Montierwagen 2 zwei mit Druckluft betätigte, mechanische Druckstempel 44, die auf den beiden Halteböcken 40 der Drehschrauber 39 befestigt sind. Diese Druckstempel 44 weisen Stößel 45 auf, die senkrecht zur Verfahrrichtung 10 des Montierwagens 2 verschiebbar sind. Die Längsachsen der beiden Schraubwerkzeuge 41 und diejenigen der Stößel 45 liegen allesamt in der vertikalen Symmetrieebene des Montierwagens 2.

Die am Fahrgestell 30 des Montierwagens 2 vorgesehene Kupplungsvorrichtung 3 ist ein gerades Rohr, mit dessen Hilfe die Zylinder-Kolben-Aggregate 35, die Drehschrauber 39 und die Druckstempel 44 vom Antriebswagen 4 her mit Druckluft versorgt werden. Dieses Rohr ist flexibel mit dem Antriebswagen 4 und dem Fahrgestell 30 verbunden. Die Kupplungsvorrichtung 3 beinhaltet auch die pneumatischen Steuerleitungen zur Betätigung der Arbeitsmittel 35, 39 und 44 des Montierwagens 2.

Zum Zwecke des Abdichtens einer Leckstelle 7 in einem Rohr 8 vom Rohrinnern her wird zunächst das Rohrinnere gereinigt und, wenn nötig, glattgefräst. Sodann wird der Antriebswagen 4 in das Rohr 8 eingeführt, mit Hilfe der Fernsehkamera 5 die Leckstelle 7 festgestellt und geortet und der Antriebswagen 4 wieder zurückgezogen.

Nun wird eine passende Dichtungsmanschette 1, deren Durchmesser etwa 10 % kleiner als die lichte Weite des Rohres 8 gewählt wird, so über den Montierwagen 2 geschoben, daß sie dessen Fahrgestell 30 mit den Betätigungseinrichtungen 38, den Drehschraubern 39 und den Druckstempeln 44 umgibt, jedoch die Räder 31 freiläßt. Eine solche Lage der Dichtungsmanschette 1 ist in Figur 1 mit Strichlinien angedeutet. Anschließend wird die Dichtungsmanschette 1 auf den Montierwagen 2 aufgelegt, indem sie auf die Betätigungsvorrichtung 38 aufgesetzt wird, wobei die beiden Ritzel 23 der Aufweitvorrichtung 18 der Dichtungsmanschette 1 von oben her in die Steckaufnahmen 43 der Köpfe 42 der Schraubwerkzeuge 41 eingeführt werden. Dadurch wird eine formschlüssige Verbindung zwischen der Betätigungsvorrichtung 38 und der Aufweitvorrichtung 18 hergestellt. Der Montierwagen 2 wird mit dem Antriebswagen 4 verbunden, und der Antriebswagen drückt unter Beobachtung mit der Fernsehkamera 5 die Vorrichtung an die Leckstelle 7.

Nun tritt die Heb- und Senkvorrichtung 36 des Montierwagens 2 in Funktion: der Montierwagen 2 hebt sich, und die Dichtungsmanschette 1 wird an den Scheitel des Rohrinnern gehoben und dort angepreßt. Jetzt wird die Betätigungsvorrichtung 38, nämlich die beiden Drehschrauber 39, in Tätigkeit gesetzt, welche auf die Aufweitvorrichtungen 18 einwirken, wodurch die Dichtungsmanschette 1 so lange aufgeweitet wird, bis sie am Rohrinnern ringsum fest anliegt und der die Dichtungsmanschette 1 umgebende Schlauch 18 in Verbindung mit den beiden endständigen Dichtungsbändern 15 die Leckstelle 7 von innen her abdichtet. Die Elastizität der Dichtungsmanschette 1 in Verbindung mit der Nachgiebigkeit des Schlauches 14 und den beiden quellfähigen Dichtungsbändern 15 gewährleistet eine dauerhafte, vollständige Abdichtung der Leckstelle 7.

Die Arretiereinrichtung 19 hält die Dichtungsmanschette 1 in ihrem aufgeweiteten Zustand auf Dauer. Zuletzt wird der Montierwagen 2 nach erfolgter Betätigung der beiden Zylinder-Kolben-Aggregate 35 durch Ausfahren der beiden Stößel 45 der Druckstempel 44 von der Dichtungsmanschette 1 gelöst, wobei er sich in seine abgesenkte Stellung zurückbegibt, er kann nun vom Antriebswagen 4 zurückgezogen werden und der Abdichtvorgang ist damit beendet.

Alle Arbeitsmittel 35, 39 und 44 des Montierwagens sind durch Druckluftleitungen 46 untereinander und mit der Kupplungsvorrichtung 3 verbunden.

## Patentansprüche

1. Vorrichtung zum Abdichten von Leckstellen in Rohren vom Rohrinnern her, mit einer an der Leckstelle in Umfangsrichtung aufweitbaren Dichtungsmanschette und einem an die Leckstelle dirigierbaren Montierwagen, wobei die Dichtungsmanschette die Form eines aus einem federelastischen Material ringförmig zusammengebogenen, aufweitbaren Bandes aufweist, dessen beide Bandenden sich in Umfangsrichtung überlappen, die von einem Schlauch aus gummielastischem Material vollständig umgeben ist, und eine Arretiereinrichtung trägt, welche sie in aufgeweitetem Zustand hält, und der Montierwagen ein mit Rädern versehenes Fahrgestell aufweist, dadurch **gekennzeichnet,** daß die Dichtungsmanschette (1) wenigstens eine vom Montierwagen (2) betätigbare Aufweitvorrichtung (18) aufweist, mit der die Arretiereinrichtung (19) in Verbindung steht, und daß der Montierwagen (2) eine Betätigungsvorrichtung (38) für die Aufweitvorrichtung (18) aufweist und eine Heb- und Senkvorrichtung (36) für die Betätigungsvorrichtung (38) besitzt.

2. Vorrichtung nach Anspruch 1, dadurch **gekennzeichnet,** daß die Aufweitvorrichtung (18) der Dichtungsmanschette (1) wenigstens ein am innenliegenden Bandende (11) in Umfangsrichtung (13) angeordneter Schlitz (20) ist, dessen eine Längsseite (21) eine Zahnreihe (22) trägt, und am außenliegenden Bandende (12) ein Ritzel (23) drehbar gelagert ist, welches in die Zahnreihe (22) eingreift.

3. Vorrichtung nach Anspruch 2, dadurch **gekennzeichnet**, daß als Arretiereinrichtung (19) ein im Schlitz (20) liegender Sperriegel (25) dient, der in das Ritzel (13) eingreift und unter der Einwirkung eines Federelementes (27) steht.

4. Vorrichtung nach einem der Ansprüche 2 oder 3, dadurch **gekennzeichnet**, daß das innenliegende Bandende (11) der Dichtungsmanschette (1) eine in Umfangsrichtung (13) vorgesehene Führungsnut (28) trägt, in die ein am außenliegenden Bandende (12) befestigter, in die Führungsnut (28) eingreifender Niederhalter (29) eingreift.

5. Vorrichtung nach einem der Ansprüche 1 bis 4, dadurch **gekennzeichnet**, daß die Dichtungsmanschette (1) auf dem Schlauch (14) zwei ringsumlaufende Dichtungsbänder (15) aus einem bei Kontakt mit Wasser aufquellenden, gummiartigen Werkstoff trägt, die neben den beiden Umfangsrändern (16) der Dichtungsmanschette (1) angeordnet sind.

6. Vorrichtung nach Anspruch 5, dadurch **gekennzeichnet,** daß in die Dichtungsbänder (15) Streifen (17) aus Kupfer eingelegt sind.

7. Vorrichtung nach einem der Ansprüche 1 bis 6, dadurch **gekennzeichnet**, daß das Fahrgestell (30) des Montierwagens (2) als Betätigungsvorrichtung (38) für die Aufweitvorrichtung (18) der Dichtungsmanschette (1) wenigstens einen motorgetriebenen Drehschrauber (39) trägt, dessen Schraubwerkzeug (41) an seinem Kopf (42) eine Steckaufnahme (43) für das Ritzel (23) der Aufweitvorrichtung (18) aufweist.

8. Vorrichtung nach einem der Ansprüche 1 bis 7, dadurch **gekennzeichnet**, daß das Fahrgestell (30) des Montierwagens (2) vier Räder (31) aufweist, von welchen jeweils zwei auf einer gemeinsamen Achse (32) drehbar befestigt sind.

9. Vorrichtung nach einem der Ansprüche 1 bis 8, dadurch **gekennzeichnet**, daß zur Bildung der Heb- und Senkvorrichtung (36) jede Achse (32) mittels eines Schwenkrahmens (33) am Fahrgestell (30) angelenkt ist und an jedem Schwenkrahmen (33) ein Zylinder-Kolben-Aggregat (35) angreift.

10. Vorrichtung nach einem der Ansprüche 1 bis 9, dadurch **gekennzeichnet**, daß der Montierwagen (2) wenigstens einen mechanischen Druckstempel (44) aufweist, welcher senkrecht zur Verfahrrichtung (10) des Montierwagens (2) wirksam ist.

11. Vorrichtung nach einem der Ansprüche 1 bis 10, dadurch **gekennzeichnet**, daß am Fahrgestell (30) eine Kupplungsvorrichtung (3) zur Verbindung des Montierwagens (2) mit einem ferngesteuerten Antriebswagen (4) vorgesehen ist.

12. Verfahren zum Abdichten von Leckstellen in Rohren vom Rohrinnern her, unter Verwendung eines Montierwagens (2) und einer Dichtungsmanschette (1) nach einem oder mehreren der Ansprüche 1 bis 11, wobei der Montierwagen (2), welcher die Dichtungsmanschette (1) trägt, zu einer Leckstelle (7) dirigiert wird, an der die Dichtungsmanschette (1) in Umfangsrichtung (13) aufgeweitet wird, **gekennzeichnet** durch folgende Verfahrensschritte:
- die Dichtungsmanschette (1) wird zunächst so über den Montienvagen (2) geschoben, daß sie dessen Fahrgestell (30) umgibt und seine Räder (31) frei läßt,
- die Dichtungsmanschette (1) wird nun auf den Montierwagen (2) aufgesetzt,
- die Dichtungsmanschette (1) wird sodann an den Scheitel des Rohrinnern gehoben und dort angedrückt,
- anschließend wird die Dichtungsmanschette (1) so lange aufgeweitet, bis sie am Rohrinnern ringsum fest anliegt,
- die Dichtungsmanschette (1) wird danach in aufgeweitetem Zustand durch die Arretiereinrichtung (19) gehalten.

13. Verfahren nach Anspruch 12, dadurch **gekennzeichnet,** daß der Montierwagen (2) zuletzt durch Abstoßen mittels mechanischer Druckstempel (44) von der Dichtungsmanschette (1) getrennt wird.

## Claims

1. Device for sealing leaks in pipes from the pipe interior, with a sealing collar which can expand in the circumferential direction at the leak and a mounting car which can be led up to the leak, wherein the sealing collar is in the form of an expandable band which is bent together in the shape of a ring from a resilient material and the two ends of which overlap in the circumferential direction, the collar being completely surrounded by a hose of an elastomeric material and bearing a retaining device which holds it in the expanded state, and the mounting car comprises a chassis provided with wheels, characterised in that the sealing collar (1) comprises at least one expanding device (18) which can be actuated by the mounting car (2) and to which the retaining device (19) is connected, and that the mounting car (2) comprises an actuating device (38) for the expanding device (18) and has a lifting and lowering device (36) for the actuating device (38).

2. Device according to claim 1, characterised in that the expanding device (18) of the sealing collar (1) is at least one slit (20) which is disposed at the inner band end (11) in the circumferential direction (13) and one longitudinal side (21) of which bears a row of teeth (22), and a pinion (23) is rotatably mounted at the outer band end (12), which pinion meshes with the row of teeth (22).

3. Device according to claim 2, characterised in that the retaining device (19) is a locking bolt (25) which lies in the slit (20), engages in the pinion (13) and is subject to the influence of a spring element (27).

4. Device according to one of claims 2 and 3, characterised in that the inner band end (11) of the sealing collar (1) bears a guide groove (28) which is provided in the circumferential direction (13) and in which a holding-down mechanism (29) engages, the latter being secured to the outer band end (12) and engaging in the guide groove (28).

5. Device according to one of claims 1 to 4, characterised in that the sealing collar (1) bears, on the hose (14), two circulating sealing bands (15) which consist of a rubberlike material swelling when coming into contact with water and which are disposed next to the two circumferential edges (16) of the sealing collar (1).

6. Device according to claim 5, characterised in that strips (17) of copper are laid in the sealing bands (15).

7. Device according to one of claims 1 to 6, characterised in that the chassis (30) of the mounting car (2) bears at least one motor-driven screw driver (39) as actuating device (38) for the expanding device (18) of the sealing collar (1), the screw tool (41) of which screw driver comprises at its head (42) a socket (43) for the pinion (23) of the expanding device (18).

8. Device according to one of claims 1 to 7, characterised in that the chassis (30) of the mounting car (2) comprises four wheels (31), two of which are in each case rotatably secured to a common axle (32).

9. Device according to one of claims 1 to 8, characterised in that, in order to form the lifting and lowering device (36), each axle (32) is articulated to the chassis (30) by means of a pivot frame (33), and a cylinder-piston unit (35) acts on each pivot frame (33).

10. Device according to one of claims 1 to 9, characterised in that the mounting car (2) comprises at least one mechanical thrust member (44) which is active perpendicularly to the direction of travel (10) of the mounting car (2).

11. Device according to one of claims 1 to 10, characterised in that a coupling device (3) is provided on the chassis (30) to connect the mounting car (2) to a remote-controlled drive car (4).

12. Method for sealing leaks in pipes from the pipe interior, using a mounting car (2) and a sealing collar (1) according to one or more of claims 1 to 11, wherein the mounting car (2), which bears the sealing collar (1), is led up to a leak (7), at which the sealing collar (1) is expanded in the circumferential direction (13), characterised by the following method steps:
- the sealing collar (1) is firstly pushed over the mounting car (2) such that it surrounds the chassis (30) thereof and leaves its wheels (31) free,
- the sealing collar (1) is now positioned on the mounting car (2),
- the sealing collar (1) is then lifted to the apex of the pipe interior and pressed against it here,
- the sealing collar (1) is subsequently expanded until it lies firmly against the pipe interior all round,
- the sealing collar (1) is then held in the expanded state by the retaining device (19).

13. Method according to claim 12, characterised in that the mounting car (2) is finally separated from the sealing collar (1) by being pushed away by means of mechanical thrust members (44).

## Revendications

1. Dispositif d'étanchement de fuites par l'intérieur des tuyaux, avec une garniture cylindrique pouvant être élargie dans le sens périphérique à l'emplacement de la fuite et un chariot de montage dirigeable sur l'emplacement de la fuite, la garniture cylindrique présentant la forme d'une bande en matière souple enroulée en anneau et pouvant être élargie, dont les deux extrémités se recouvrent dans le sens périphérique, étant complètement entourée par une gaine en matière élastique et portant un dispositif d'arrêt, lequel la maintient dans l'état élargi, et le chariot de montage présentant un châssis équipé de roues, caractérisé en ce que la garniture cylindrique (1) présente au moins un dispositif d'élargissement (18) pouvant être actionné par le chariot de montage (2), avec lequel le dispositif d'arrêt (19) est en relation, et en ce que le chariot de montage (2) présente un dispositif d'actionnement (38) pour le dispositif d'élargissement (18) et possède un dispositif de montée et descente (36) pour le dispositif d'actionnement (38).

2. Dispositif selon la revendication 1, caractérisé en ce que le dispositif d'élargissement (18) de la garniture cylindrique (1) est constitué par au moins une fente (20) disposée dans le sens périphérique (13) à l'extrémité de bande (11) intérieure, dont un côté longitudinal (21) porte une rangée de dents (22), et un pignon (23) est monté en rotation à l'extrémité de bande (12) extérieure, lequel pignon s'engrène dans la rangée de dents (22).

3. Dispositif selon la revendication 2, caractérisé en ce qu'un verrou de sûreté (25) situé dans la fente (20) sert de dispositif d'arrêt (19), lequel verrou s'engage sur le pignon (23) et agit sous l'effet d'un élément à ressort (27).

4. Dispositif selon l'une des revendications 2 ou 3, caractérisé en ce que l'extrémité de bande (11) intérieure de la garniture cylindrique (1) porte une rainure de guidage (28) prévue dans le sens périphérique (13), dans laquelle s'engage un serre-flanc (29) s'engageant dans la rainure de guidage (28) et fixé à l'extrémité de bande (12) extérieure.

5. Dispositif selon l'une des revendications 1 à 4, caractérisé en ce que la garniture cylindrique (1) porte sur la gaine (14) deux bandes d'étanchéité (15) sur tout le tour dans une matière de type caoutchouc se gonflant d'eau en contact, qui sont disposées près des deux bords périphériques (16) de la garniture cylindrique (1).

6. Dispositif selon la revendication 5, caractérisé en ce que des bandes (17) en cuivre sont placées dans les bandes d'étanchéité (15).

7. Dispositif selon l'une des revendications 1 à 6, caractérisé en ce que le châssis (30) du chariot de montage (2) porte en tant que dispositif d'actionnement (38) pour le dispositif d'élargissement (18) de la garniture cylindrique (1) au moins un tournevis va-et-vient (39) à moteur, dont l'outil de vissage (41) présente sur sa tête (42) un logement enfichable (43) pour le pignon (23) du dispositif d'élargissement (18).

8. Dispositif selon l'une des revendications 1 à 7, caractérisé en ce que le châssis (30) du chariot de montage (2) présente quatre roues (31), dont à chaque fois deux d'entre elles sont fixées en rotation sur un axe commun (32).

9. Dispositif selon l'une des revendications 1 à 8, caractérisé en ce que, pour la formation du dispositif de montée et descente (36), chaque axe (32) est articulé sur le châssis ( 30 ) au moyen d'un cadre pivotant ( 33 ) et un groupe cylindre-piston (35) s'engage sur chaque cadre pivotant (33).

10. Dispositif selon l'une des revendications 1 à 9, caractérisé en ce que le chariot de montage (2) présente au moins un piston-chasse (44) mécanique, lequel agit verticalement au sens de déplacement (10) du chariot de montage (2).

11. Dispositif selon l'une des revendications 1 à 10, caractérisé en ce qu'un dispositif d'accouplement (3) pour relier le chariot de montage (2) à un chariot d'entraînement (4) télécommandé est prévu sur le châssis (30).

12. Procédé d'étanchement de fuites par l'intérieur des tuyaux, en utilisant un chariot de montage (2) et une garniture cylindrique (1) suivant l'une ou plusieurs des revendications 1 à 11, le chariot de montage (2), lequel porte la garniture cylindrique (1), étant dirigé vers une fuite (7), contre laquelle la garniture cylindrique (1) est élargie dans le sens périphérique (13), caractérisé par les étapes de procédé suivantes :
- la garniture cylindrique (1) est d'abord poussée pardessus le chariot de montage (2) de telle manière qu'elle entoure son châssis (30) et laisse ses roues (31) libres,
- la garniture cylindrique (1) est maintenant placée sur le chariot de montage (2),
- la garniture cylindrique (1) est ensuite levée contre le sommet de l'intérieur du tuyau et y est pressée,
- la garniture cylindrique (1) est ensuite élargie jusqu'à ce qu'elle repose fermement contre l'intérieur du tuyau sur tout le tour,
- la garniture cylindrique (1) est ensuite maintenue dans l'état élargi par le dispositif d'arrêt (19).

13. Procédé selon la revendication 12, caractérisé en ce que le chariot de montage (2) est finalement séparé de la garniture cylindrique (1) par refoulement au moyen de pistons-chasses (44) mécaniques.
